# FASCICULE DE BREVET EUROPEEN

(11) **EP 2 181 279 B1**
(45) Date de publication et mention de la délivrance du brevet: **28.12.2011**
(21) Numéro de dépôt: 08844325.4
(22) Date de dépôt: 08.08.2008
(51) Int. Cl.: F16J 15/02, F16J 15/06

(54) **JOINT D'ÉTANCHÉITÉ DOUBLE**
DOPPELDICHTUNG
DOUBLE SEAL

(30) Priorité: 20.08.2007 FR 0705932
(43) Date de publication de la demande: 05.05.2010
(73) Titulaire: Aircelle, 76700 Gonfreville l'Orcher (FR); JPR, 75008 Paris (FR)
(72) Inventeur: BUNEL, Serge, F-76610 Le Havre (FR)
(74) Mandataire: Delorme, Nicolas
(86) Numéro de dépôt international: PCT/FR2008/001182
(87) Numéro de publication internationale: WO 2009/056700

(56) Documents cités:
- DE-A1- 10 325 237
- GB-A- 2 340 111
- US-A- 5 251 917

## Description

L'invention concerne un joint d'étanchéité conçu pour isoler une zone susceptible de connaître un feu dans un ensemble propulseur d'aéronef.

Un aéronef peut être propulsé par plusieurs turboréacteurs logés chacun dans une nacelle abritant également un ensemble d'équipements annexes liés à son fonctionnement et assurant diverses fonctions lorsque le turboréacteur est en fonctionnement ou à l'arrêt.

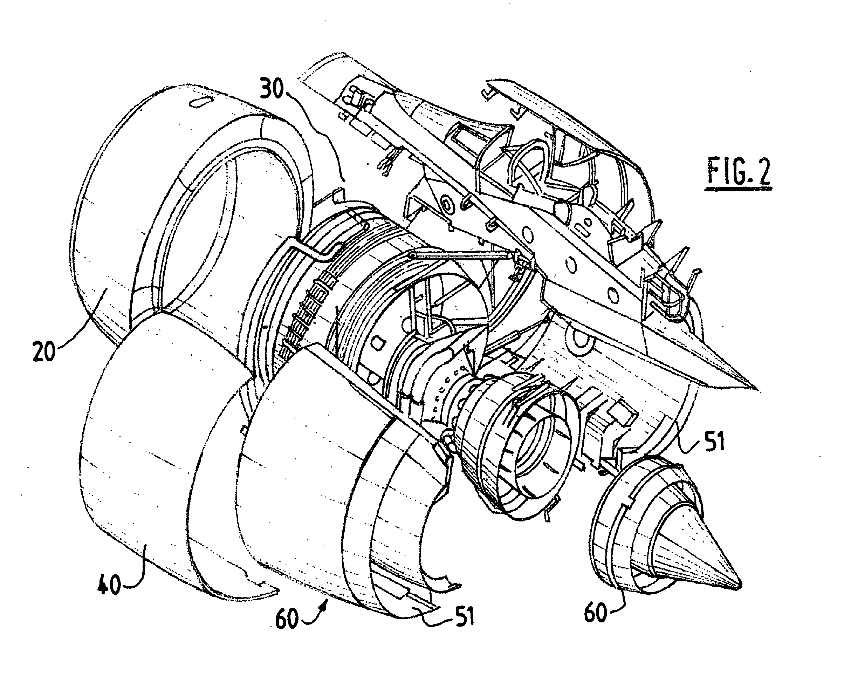

Une nacelle comme celle montrée à titre d'exemple à la Figure 2 présente généralement une structure tubulaire comprenant
(i) une entrée d'air 20 en avant d'un turboréacteur 30,
(ii) une section médiane 40 destinée à entourer une soufflante du turboréacteur,
(iii) une section arrière 50 pouvant éventuellement embarquer des moyens d'inversion de poussée et destinée à entourer la chambre de combustion du turboréacteur 30, et
(iv) une tuyère d'éjection 60 dont la sortie est située en aval du turboréacteur.

Les nacelles modernes sont souvent destinées à abriter un turboréacteur double flux apte à générer par l'intermédiaire des pales de la soufflante en rotation un flux d'air chaud (également appelé flux primaire) issu de la chambre de combustion du turboréacteur.

Chaque ensemble propulsif de l'avion est ainsi formé par une nacelle et un turboréacteur, et est suspendu à une structure fixe de l'avion, par exemple sous une aile ou sur le fuselage, par l'intermédiaire d'un pylône ou mât rattaché au turboréacteur ou à la nacelle.

La section arrière de la structure externe de la nacelle est usuellement formée de deux capots 51 de forme sensiblement hémicylindrique, de part et d'autre d'un plan vertical longitudinal de symétrie de la nacelle, et montés mobiles de manière à pouvoir se déployer entre une position de travail et une position de maintenance en vue de donner accès au turboréacteur.

Les deux capots 51 sont généralement montés pivotants autour d'un axe longitudinal formant charnière en partie supérieure (à 12 heures) de l'inverseur. Les capots 51 sont maintenus en position de fermeture au moyen de verrous disposés le long d'une ligne de jonction située en partie inférieure (à 6 heures).

A 6 heures, le turboréacteur possède un équipement déporté ; il s'agit d'un relais d'accessoires qui comprend notamment un démarreur, une pompe à carburant, une pompe hydraulique. Un arbre de puissance relie le démarreur au turboréacteur et différentes canalisations notamment de carburant et de fluides sous pression sont disposées radialement pour l'alimentation du turboréacteur depuis le relais d'accessoires.

Compte tenu de la présence de carburant, la zone de la nacelle qui assure la liaison entre le relais d'accessoires et le turboréacteur doit être confinée pour qu'un feu éventuellement alimenté par une fuite de carburant ne se propage pas au reste de l'ensemble propulsif.

Les joints résistants au feu sont habituellement constitués d'une matrice de silicone qui confère l'élasticité au joint, armée de tissu de verre ou de carbone qui confère la tenue au feu. La tenue au feu est principalement obtenue par le tissu de verre ou de carbone dont l'armure est dense et serrée. En contrepartie, ce type de joint est extrêmement raide et est incapable d'épouser une surface d'appui accidentée. En particulier, ce type de joint est inadapté pour des zones curvilignes ayant un faible rayon. Or, une nacelle est une pièce complexe qui présente des contours internes particulièrement accidentés. Un tel joint est par exemple décrit dans le document US 5 251 917.

En plus de constituer une barrière au feu, un joint doit réaliser une barrière d'étanchéité entre la nacelle et le turboréacteur c'est-à-dire qu'il doit en permanence maintenir un contact entre ces deux éléments. Or, dans un ensemble propulseur d'avion, la nacelle peut présenter de grandes dimensions et, par conséquent, les mouvements relatifs qui se produisent entre la nacelle et le turboréacteur au cours de son fonctionnement peuvent être de grande amplitude.

Un but de l'invention est d'améliorer l'étanchéité et la tenue au feu d'un joint d'étanchéité interposé entre un élément d'une nacelle et un élément d'un turboréacteur.

L'invention a essentiellement pour objet un joint d'étanchéité conçu pour être interposé entre un élément de nacelle et un élément d'un turboréacteur d'un ensemble propulsif d'un avion ; ce joint d'étanchéité comprend au moins deux parties tubulaires parallèles présentant chacune une section transversale quadrangulaire incluant une face d'appui plane, une face convexe de contact avec un élément à étancher et deux faces latérales concaves reliant la face convexe de contact à la face plane d'appui, les deux parties tubulaires étant constituées d'une nappe tricotée enduite d'une matrice synthétique élastique.

Ainsi le joint d'étanchéité selon l'invention présente une remarquable tenue au feu rapportée à un encombrement réduit et à une grande capacité d'écrasement.

En terme de tenue au feu, le joint d'étanchéité selon l'invention crée une double barrière. En cas d'incendie le joint d'étanchéité conserve sa capacité de confinement par dissipation d'une partie de l'énergie des flammes par l'une des parties tubulaires qui peut en partie ou en totalité se consumer tandis que la seconde partie tubulaire reste intacte.

En terme de flexibilité, le joint d'étanchéité 1 selon l'invention peut épouser un cheminement curviligne qui possède des angles à faible rayon par sa nappe tricotée qui présente des taux d'allongement importants et ce dans toutes les directions.

En terme d'encombrement en phase d'écrasement, le joint d'étanchéité selon l'invention présente un comportement extrêmement favorable car les faces latérales concaves fléchissent vers l'intérieur de chaque partie tubulaire. La concavité des faces latérales permet, d'une part, de placer le joint d'étanchéité dans un emplacement de dimensions réduites et, d'autre part, de juxtaposer deux parties tubulaires qui peuvent donc chacune s'écraser sans interférence latérale.

Selon une disposition préférée de l'invention, les deux parties tubulaires sont jointes au niveau de leur face d'appui par une semelle. Ainsi, le joint d'étanchéité constitue un ensemble unitaire qui peut être mis en place par exemple par collage ou par une fixation mécanique de type rivetage en le déroulant sur une partie de nacelle.

Il est envisagé que la nappe tricotée soit constituée de fils d'une matière du groupe comprenant le verre, le carbone, et la céramique.

Dans une forme de réalisation, chaque partie tubulaire présente une section transversale sensiblement carrée.

Pour sa bonne compréhension, l'invention est décrite en référence au dessin ci annexé représentant à titre d'exemple non limitatif une forme de réalisation d'un joint d'étanchéité selon celle-ci.
La figure 1 est une vue en coupe transversale d'une forme de réalisation d'un joint d'étanchéité selon l'invention embarqué sur un capot d'une section arrière d'une nacelle ;
La figure 2 est une vue éclatée en perspective d'un ensemble propulseur d'aéronef comprenant une nacelle et un turboréacteur ;
La figure 3 est une vue partielle en perspective d'une demi section arrière d'une nacelle, montrant l'emplacement du joint selon l'invention ;
La figure 4 est une vue agrandie du détail IV de la figure 3.

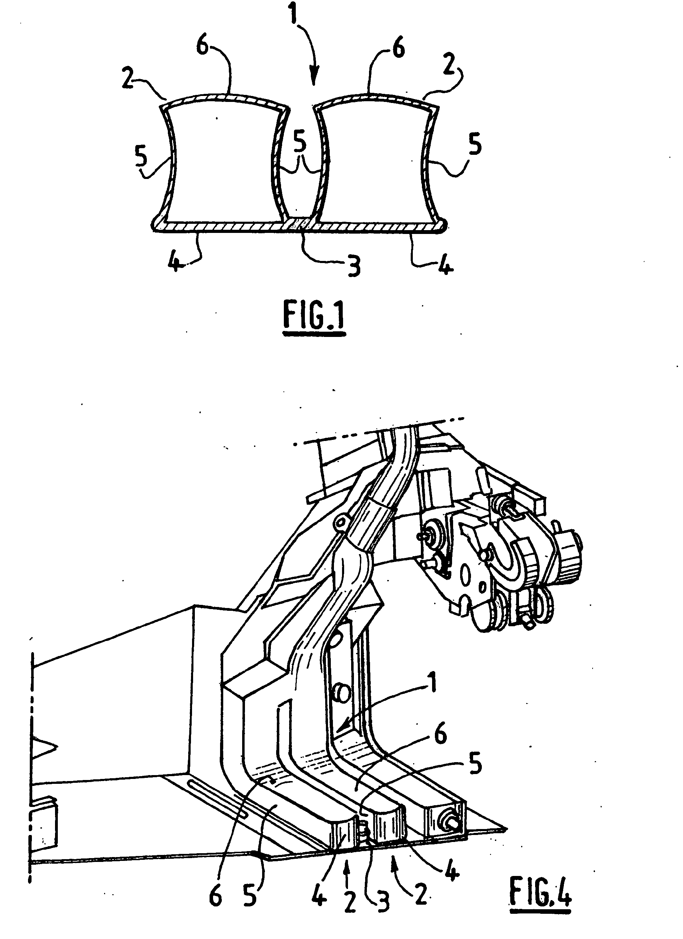

Comme le montre la Figure 1, le joint d'étanchéité 1 comprend deux parties tubulaires 2 reliées par une semelle 3 commune. Dans l'exemple représenté, les deux parties tubulaires 2 sont identiques et présentent chacune une section transversale quadrangulaire. Chaque partie tubulaire 2 possède ainsi une face d'appui qui se confond en partie avec la semelle d'appui 3 ; de la face d'appui 4, partent sensiblement perpendiculairement deux faces latérales 5 concaves qui soutiennent une face de contact 6 convexe.

Le joint d'étanchéité 1 selon l'invention est constitué d'une nappe tricotée c'est-à-dire une structure formée par un entrelacement de boucles formées par un ou plusieurs fils ; la nappe tricotée présente des taux d'allongement importants dans toutes les directions. Les fils qui entrent dans la composition de la nappe tricotée sont des fils qui présentent une grande tenue au feu et peuvent être par exemple des fils de céramique, de carbone ou de verre. La nappe tricotée reçoit une enduction d'une matière telle que par exemple du silicone qui présente également un taux d'allongement important.

A titre purement indicatif, l'épaisseur des faces concaves latérales 5 et de la face convexe de contact 6 peut être, par exemple, de l'ordre de 1 à 2 mm tandis que l'épaisseur de la face d'appui 4 peut être, par exemple, de l'ordre de 2 à 4 mm.

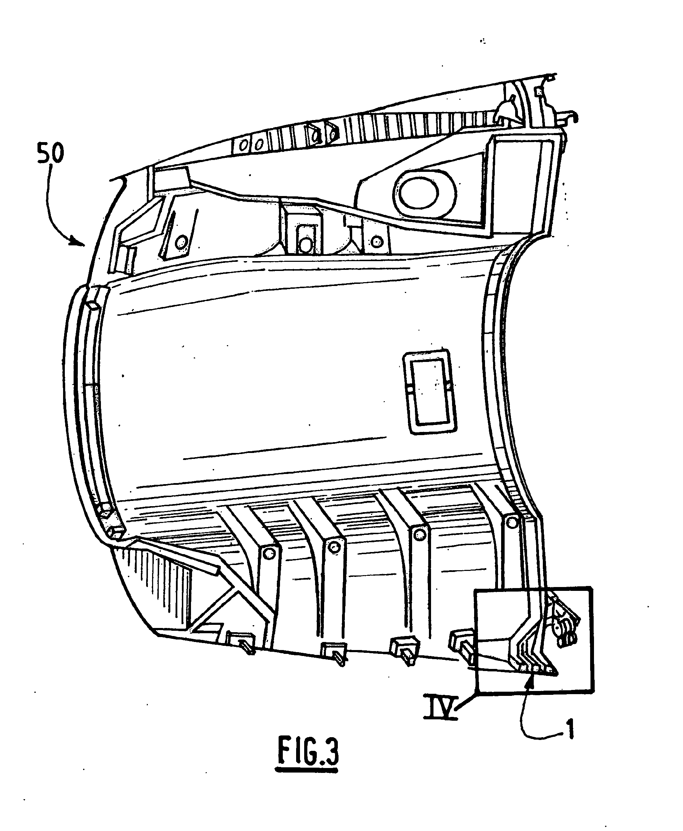

Le joint d'étanchéité 1 tel qu'il apparaît à la Figure 1 est positionné sur une nacelle d'ensemble propulseur pour border et confiner une zone susceptible de connaître un feu accidentel ; il peut s'agir, par exemple, de la zone de la nacelle qui se trouve à 6 heures et qui est traversée par l'arbre de puissance et diverses canalisations qui relient le relais d'accessoires au turboréacteur, comme illustré sur les figures 3 et 4.

En terme de tenue au feu, le joint d'étanchéité 1 selon l'invention crée une double barrière. Chaque partie tubulaire 2 à elle seule ne constitue pas une barrière suffisante au feu. La tenue au feu est obtenue par la combinaison des deux parties tubulaires 2 qui forment un joint d'étanchéité au feu par dissipation d'une partie de l'énergie des flammes par l'une des parties tubulaires 2 qui peut en partie ou en totalité se consumer tandis que la seconde partie tubulaire 2 reste intacte et conserve son pouvoir de confinement. Le fait d'utiliser deux parties tubulaires 2 en parallèle a également un corollaire favorable en terme d'encombrement. En effet, à tenue au feu égale, un joint d'étanchéité selon l'état de la technique à unique partie tubulaire devra posséder une section transversale largement supérieure à la somme des sections transversales des deux parties tubulaires 2 du joint d'étanchéité 1 selon l'invention.

En terme de flexibilité, le joint d'étanchéité 1 selon l'invention peut épouser un cheminement curviligne qui possède des angles à faible rayon ; cette faculté est conférée au joint d'étanchéité 1 selon l'invention par sa nappe tricotée qui présente des taux d'allongement importants, et ce dans toutes les directions.

En terme d'encombrement en phase d'écrasement, le joint d'étanchéité 1 selon l'invention présente un comportement extrêmement favorable. En effet, lorsque l'élément de l'ensemble propulsif qui vient appuyer sur la face de contact se déplace par rapport à l'élément sur lequel le joint d'étanchéité est fixé, le joint d'étanchéité s'écrase à largeur constante. En effet, les faces latérales concaves fléchissent vers l'intérieur de chaque partie tubulaire. La concavité des faces latérales permet, d'une part, de placer le joint d'étanchéité dans un emplacement de taille réduite et, d'autre part, de juxtaposer deux parties tubulaires qui peuvent donc chacune s'écraser sans interférence latérale.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention. Ainsi, les parties tubulaires pourraient présenter une section transversale rectangulaire. Il peut également être envisagé de réaliser un joint dont les parties tubulaires sont asymétriques pour prendre en compte des contours particuliers des surfaces à étancher.

## Revendications

1. Joint d'étanchéité (1) conçu pour être interposé entre un élément de nacelle et un élément d'un turboréacteur d'un ensemble propulsif d'un avion, **caractérisé en ce que** le joint d'étanchéité (1) comprend au moins deux parties tubulaires (2) parallèles présentant chacune une section transversale quadrangulaire incluant une face d'appui plane (4), une face convexe de contact (6) avec un élément à étancher et deux faces latérales (5) concaves reliant la face convexe (6) de contact à la face plane d'appui (4), les deux parties tubulaires (2) étant constituées d'une nappe tricotée enduite d'une matrice synthétique.

2. Joint d'étanchéité selon la revendication 1, **caractérisé en ce que** les deux parties tubulaires (2) sont jointes au niveau de leur face d'appui (4) par une semelle (3).

3. Joint d'étanchéité selon la revendication 1 ou la revendication 2, **caractérisé en ce que** la nappe tricotée est constituée d'une matière du groupe comprenant le verre, le carbone, et la céramique.

4. Joint d'étanchéité selon l'une des revendications 1 à 3, **caractérisé en ce que** chaque partie tubulaire (2) présente une section transversale sensiblement carrée.

## Claims

1. A seal (1) designed to be interposed between a nacelle element and an element of a turbojet of a propulsion unit of an aircraft, **characterized in that** the seal (1) comprises at least two parallel tubular portions (2) each having a quadrangular cross section including a planar bearing face (4), a convex contact face (6) for contact with an element to be sealed, and two concave side faces (5) connecting the convex contact face (6) to the planar bearing face (4), the two tubular portions (2) being formed by a knitted fabric coated with a synthetic matrix.

2. The seal as claimed in claim 1, **characterized in that** the two tubular portions (2) are joined at their bearing face (4) by a sole (3).

3. The seal as claimed in claim 1 or claim 2, **characterized in that** the knitted fabric consists of a material from the group comprising glass, carbon and ceramic.

4. The seal as claimed in one of claims 1 to 3, **characterized in that** each tubular portion (2) has a substantially square cross section.

## Patentansprüche

1. Dichtung (1), die konstruiert ist, um zwischen einem Gondelelement und einem Element eines Turbotriebwerks einer Antriebseinheit eines Flugzeugs zwischengestellt zu sein, **dadurch gekennzeichnet, dass** die Dichtung (1) mindestens zwei parallele rohrartige Abschnitte (2) umfasst, die jeweils einen viereckigen Querschnitt aufweisen inklusive einer ebenen Abstützfläche (4), einer konvexen Kontaktfläche (6) mit einem abzudichtenden Element und zwei konkaven Seitenflächen (5), die die konvexe Kontaktfläche (6) mit der ebenen Abstützfläche (4) verbinden, wobei die zwei rohrartigen Abschnitte (2) aus einem mit einer synthetischen Matrix beschichteten Gewirk bestehen.

2. Dichtung nach Anspruch 1, **dadurch gekennzeichnet, dass** die zwei rohrartigen Abschnitte (2) auf Ebene ihrer Abstützfläche (4) durch eine Sohle (3) verbunden sind.

3. Dichtung nach Anspruch 1 oder Anspruch 2, **dadurch gekennzeichnet, dass** das Gewirk aus einem Material der Gruppe besteht, die das Glas, den Kohlenstoff und die Keramik umfasst.

4. Dichtung (1) nach einem der Ansprüche 1 bis 3, **dadurch gekennzeichnet, dass** jeder rohrartige Abschnitt (2) einen etwa quadratischen Querschnitt aufweist.
